(19) Europäisches Patentamt / European Patent Office / Office européen des brevets

(11) **EP 4 756 917 A1**

(12) **EUROPEAN PATENT APPLICATION**

(43) Date of publication:
**10.06.2026 Bulletin 2026/24**

(21) Application number: 25213755.9

(22) Date of filing: **05.11.2025**

(51) International Patent Classification (IPC):
*H01M 4/38* (2006.01)    *H01M 4/36* (2006.01)

(52) Cooperative Patent Classification (CPC):
**H01M 4/386;** H01M 4/362; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.12.2024 CN 202411771119**

(71) Applicant: **Zhuhai CosMX Battery Co., Ltd.
Zhuhai, Guangdong 519180 (CN)**

(72) Inventor: **WANG, Di
Zhuhai, 519180 (CN)**

(74) Representative: **Murgitroyd & Company
165-169 Scotland Street
Glasgow G5 8PL (GB)**

(54) **BATTERY**

(57) A battery, comprising a case and a cell, wherein the case is provided with a pressure relief groove; the cell is arranged within the case and comprises a positive electrode plate, a negative electrode plate, and a separator located between the positive and negative electrode plates; the negative electrode plate comprises a negative electrode current collector and a negative electrode active material layer located on the negative electrode current collector, the negative electrode active material layer comprising a silicon-carbon composite material; and a ratio of the Dv50 of the silicon-carbon composite material to a depth of the pressure relief groove ranges from 0.06 to 0.6.

EP 4 756 917 A1

**Description**

**TECHNICAL FIELD**

The invention belongs to the field of new energy technology, and in particular relates to a battery.

**BACKGROUND**

With the continuous growth of market demand, developing a lithium-ion battery with a high energy density and high fast-charging efficiency has become a future development trend. The specific capacity of traditional graphite materials has approached its theoretical specific capacity (372 mAh/g), which is difficult to achieve further improvement, and cannot meet the market demand for high energy density batteries.

A pressure relief groove is provided to discharge gas as soon as possible to avoid the explosion of the battery in the case of a thermal runaway of a cell. The theoretical specific capacity of a silicon material (4200 mAh/g) is 10 times higher than that of a graphite material, and the silicon material is thus considered as the most potential next-generation high energy density lithium-ion battery material. However, along with a volume expansion of a silicon material of 120%-300% during the intercalation and de-intercalation of lithium, a negative electrode plate expands, which easily leads to the premature tearing of a pressure relief groove of a battery, thus affecting the normal use of the battery.

**SUMMARY**

Accordingly, the invention provides a battery, by controlling a particle size Dv50 of a silicon-carbon composite material in a negative electrode plate and a depth of a pressure relief groove, the relationship therebetween is established, so as to prevent the premature tearing of the pressure relief groove due to the expansion of the negative electrode plate during charging and discharging, thereby ensuring the normal operation of the battery.

Thus, the invention provides the following technical solution.

The invention provides a battery, including a case and a cell, wherein the case is provided with a pressure relief groove; the cell is arranged within the case

and includes a positive electrode plate, a separator and a negative electrode plate, which are stacked; the negative electrode plate includes a negative electrode current collector and a negative electrode active material layer located on the negative electrode current collector, the negative electrode active material layer including a silicon-carbon composite material; and

a ratio of the particle size Dv50 of the silicon-carbon composite material to the depth of the pressure relief groove ranges from 0.06 to 0.6.

In a possible embodiment, the particle size Dv50 of the silicon-carbon composite material ranges from 5 μm to 20 μm, preferably 6 μm to 12 μm.

In a possible embodiment, the depth of the pressure relief groove is 35 μm to 85 μm, preferably 40 μm to 80 μm. An excessively deep pressure relief groove will be broken during a drop test, leading to fire and explosion of a battery. In the case where a pressure relief groove is too shallow, the pressure relief groove cannot be broken in time during an oven test, and heat and gas cannot be dissipated, which may lead to fire and explosion of a battery.

In a possible embodiment, the case comprises a body having an accommodating cavity that is used for accommodating the cell and has an opening, and a cover plate covering the opening; the surface of one side of the cell facing the cover plate is provided with a bonding member;

$$A : B = 0.015\text{-}2,$$

where A is a content in percentage by mass of element silicon in the negative electrode active material layer, and

B is the ratio, in percentage, of a projected area of the bonding member along the thickness direction of the cell to a projected area of a electrode plate to which the bonding member is bonded along the thickness direction of the cell; optionally, A ranges from 1.5 % to 40 %; and

optionally, B ranges from 20 % to 95 %.

In a possible embodiment, the pressure relief groove is provided on the cover plate;

In a possible embodiment, the pressure relief groove and the bonding member are arranged in an offset manner in the projection along the thickness direction of the case; and

In a possible embodiment, the pressure relief groove and the negative electrode plate are arranged in an offset manner in the projection along the thickness direction of the case.

In a possible embodiment, the ratio of the depth of the pressure relief groove to the thickness of the cover plate ranges from 0.35 to 0.9, preferably 0.45 to 0.8.

Optionally, the depth of the pressure relief groove ranges from 35 $\mu$m to 85 $\mu$m, preferably 40 $\mu$m to 80 $\mu$m; and

optionally, the thickness of the cover plate ranges from 70 $\mu$m to 200 $\mu$m, preferably 70 $\mu$m to 160 $\mu$m.

In a possible embodiment, the silicon-carbon composite material has an average degree of sphericity ranging from 0.5 to 1.

In a possible embodiment, the negative electrode plate has a porosity ranging from 5 % to 50 %.

In a possible embodiment, the negative electrode plate has an OI value ranging from 3 to 35.

In a possible embodiment, the silicon-carbon composite material comprises a porous carbon substrate, silicon dispersed within porous carbon channels, and a carbon coating layer located on a surface of the porous carbon substrate;

optionally, the carbon coating layer is amorphous carbon; and

optionally, the mass content of element silicon in the silicon-carbon composite material ranges from 30 % to 90 %, preferably 35 % to 70 %.

In a possible embodiment, the silicon-carbon composite material comprises open pores and/or closed pores, the closed pores referring to pores that are covered by the carbon coating layer in the porous carbon substrate, and open pores referring to pores that are not covered by the carbon coating layer in the porous carbon substrate; and

optionally, the area of the open pores is smaller than that of the closed pores.

The technical solution of the invention has the following advantages.

1. The battery of the invention includes the case and the cell, wherein the case is provided with a pressure relief groove; the cell is arranged within the case and includes a positive electrode plate, a separator and a negative electrode plate, which are stacked; the negative electrode plate includes a negative electrode current collector and a negative electrode active material layer located on the negative electrode current collector, the negative electrode active material layer including a silicon-carbon composite material; and the ratio of the particle size Dv50 of the silicon-carbon composite material to the depth of the pressure relief groove ranges from 0.06 to 0.6.

Dv50 refers to the median particle size of the silicon-carbon composite material; and the silicon-carbon composite material will drastically expand during charging and discharging, such that the cell is likely to extrude the case and the cover plate, resulting in premature tearing of the pressure relief groove (thinned portion). For a silicon-doped negative electrode in a fully-charged state or in a later cycling stage, the expansion of the silicon-carbon composite material leads to different stress at different positions of the cell, and the nonuniform stress results in the deformation of the cell. The silicon-carbon composite material loses its activity after expansion, and the particles lose electrical contact, which leads to lithium plating and even short-circuit fire. Therefore, in the invention, by limiting the ratio of the Dv50 of the silicon-carbon composite material to the depth of the pressure relief groove, the battery can be directionally and timely exploded (that is, the pressure relief groove can normally realize pressure relief function), and the premature tearing of the pressure relief groove caused by excessive expansion of the negative electrode plate during charging and discharging of the steel-cased battery can also be prevented.

Additional aspects and advantages of the examples of the invention will be described and shown in part in the following descriptions, or will be explained by means of the implementation of the examples of the invention.

## BRIEF DESCRIPTION OF THE DRAWINGS

In order to illustrate the technical solutions in the particular embodiments of the invention or in the prior art more clearly, the accompanying drawings to be used in the description of the particular embodiments or the prior art will be briefly introduced below; obviously, the accompanying drawings in the following description show some of the embodiments of the present application, and those of ordinary skill in the art may still obtain other drawings from these accompanying drawings without creative effort.

FIG. 1 shows a structural schematic diagram of a battery;

FIG. 2 shows an SEM image A of a silicon-carbon composite material; and
FIG. 3 shows an SEM image B of the silicon-carbon composite material.
FIG. 4 shows a structural schematic diagram of a body.
FIG. 5 shows a parital structural schematic diagram of a body.

Reference signs:

1 - cover plate; 101 - pressure relief groove; 2 - bonding member; 3 - cell; 4 - body; 41 - positive terminal; 42 - through hole; 431 - metal ring; 432 - PP adhesive; 433 - metal sheet.

## DETAILED DESCRIPTIONS OF THE EMBODIMENTS

The following examples are provided for a better understanding of the invention, are not limited to the preferred embodiments, and do not limit the content and scope of protection of the invention, and any product that is identical or similar to the invention, derived from the inspiration of the invention or by combining the invention with other features of the prior art, falls within the scope of protection of the invention.

The examples in which experimental steps or conditions are not specified are based on the operations of conventional experimental steps or conditions described in documents in the art. The reagents or instruments used without indicating a manufacturer are all commercially available conventional reagent products.

In addition, the technical features referred to in different embodiments of the invention described below can be combined with each other as long as they do not conflict with each other.

In the first aspect, the invention provides a battery, including a case and a cell, wherein the case is provided with a pressure relief groove; the cell is arranged within the case and includes a positive electrode plate, a separator and a negative electrode plate, which are stacked; the negative electrode plate includes a negative electrode current collector and a negative electrode active material layer located on the negative electrode current collector, the negative electrode active material layer including a silicon-carbon composite material; and
a ratio of a particle size Dv50 of the silicon-carbon composite material to a depth of the pressure relief groove ranges from 0.06 to 0.6.

The cell is a wound cell, a stacked cell or a hybrid cell (wound cell + stacked cell).

By limiting the ratio of the Dv50 of the silicon-carbon composite material to the depth of the pressure relief groove within the range of the invention, the battery can be directionally and timely exploded, and the premature tearing of the pressure relief groove caused by excessive expansion of the negative electrode plate during charging and discharging of the steel-cased battery can also be prevented.

For example, the ratio of the Dv50 of the silicon-carbon composite material to the depth of the pressure relief groove may be 0.06, 0.10, 0.12, 0.14, 0.16, 0.18, 0.2, 0.22, 0.24, 0.3, 0.4, 0.5 or 0.6.

In an optional embodiment, the particle size Dv50 of the silicon-carbon composite material ranges from 5 $\mu$m to 20 $\mu$m, preferably 6 $\mu$m to 12 $\mu$m, and may be, for example, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 18 $\mu$m, 19 $\mu$m or 20 $\mu$m. A silicon-carbon composite material with a relatively small Dv50 can assist in reducing the mechanical stress and stress concentration of the silicon-carbon composite material during charging and discharging, and is beneficial for maintaining the structural stability of the silicon-carbon composite material and reducing the breakage or structural damage of particles, thereby prolonging the service life of a battery. However, if the particle size of the silicon-carbon composite material is too small, the side reaction between the silicon-carbon composite material and the electrolyte will increase, which aggravates the pulverization of particles and causes the thickening of a negative electrode plate. The Dv50 of the silicon-carbon composite material has influence on the expansion rate of the particles and the recovery extent of the thickness of an electrode plate that is fully-charged or cycled.

In an optional embodiment, the depth of the pressure relief groove ranges from 35-85 $\mu$m, preferably 40-80 $\mu$m, and may be, for example, 35 $\mu$m, 40 $\mu$m, 50 $\mu$m, 60 $\mu$m, 70 $\mu$m, 80 $\mu$m or 85 $\mu$m. The depth of the pressure relief groove has influence on the safety performance of a battery; and if the depth is not within the range of the invention, the expansion of the silicon-carbon composite material during normal charging and discharging tends to result in the overall deformation of the negative electrode plate, or even of the cell, thus leading to the premature tearing of the pressure relief groove.

In an optional embodiment, the case comprises a body having an accommodating cavity that is used for accommodating the cell and has an opening, and a cover plate covering the opening; the surface of one side of the cell facing the cover plate is provided with a bonding member;

$$A : B = 0.015\text{-}2,$$

where A is the content in percentage by mass of element silicon in the negative electrode active material layer, and

B is the ratio, in percentage, of the projected area of the bonding member along the thickness direction of the cell to the projected area of the electrode plate to which the bonding member is bonded along the thickness direction of the cell.

The bonding member may be a hot melt adhesive or adhesive paper.

By limiting the ratio of A : B within the range of the invention, the mechanical stress of the silicon-carbon composite material in the negative electrode plate during charging and discharging can be effectively dispersed while the energy density is increased; the action forces of the cell and the case are transmitted through the bonding member, and the force applied by the cell to the bonding member is effectively dispersed, such that the force per unit area applied to the case is actually reduced, thereby preventing the premature tearing of the pressure relief groove caused by excessive expansion of the negative electrode plate during charging and discharging of the steel-cased battery and improving the protective effect of the case on the cell; and similarly, the reaction force per unit area applied to the cell is reduced, thereby preventing the corner or edge of the cell from folding.

For example, the ratio of A : B may be 0.015, 0.1, 0.2, 0.3, 0.4, 0.5, 0.6, 0.7, 0.8, 0.9, 1, 1.2, 1.4, 1.6, 1.8 or 2.0.

In an optional embodiment, A ranges from 1.5 %-40 %. Within the range, the lithium ion intercalation/de-intercalation capacity of the silicon-carbon composite material can be fully realized, thereby preventing an electrode plate from excessive expansion caused by an excessively high content of the silicon-carbon composite material while increasing the energy density.

Optionally, A ranges from 7 % to 20 %; and B ranges from 20 % to 95 %, preferably 50 % to 90 %.

In an optional embodiment, the pressure relief groove and the bonding member are arranged in an offset manner in the projection along the thickness direction of the case; and

in a possible embodiment, the pressure relief groove and the negative electrode plate are arranged in an offset manner in the projection along the thickness direction of the case.

In an optional embodiment, the ratio of the depth of the pressure relief groove to the thickness of the cover plate ranges from 0.35 to 0.9, preferably 0.45-0.8. For example, the ratio of the depth of the pressure relief groove to the thickness of the cover plate may be 0.35, 0.45, 0.5, 0.6, 0.7, 0.8 or 0.9.

Optionally, the depth of the pressure relief groove ranges from 35 $\mu$m to 85 $\mu$m, preferably 40 $\mu$m to 80 $\mu$m.

Optionally, the thickness of the cover plate ranges from 70 $\mu$m to 200 $\mu$m, preferably 70-160 $\mu$m, and may be, for example, 70 $\mu$m, 80 $\mu$m, 90 $\mu$m, 100 $\mu$m, 105 $\mu$m, 110 $\mu$m, 130 $\mu$m, 150 $\mu$m, 180 $\mu$m or 200 $\mu$m.

In the case where the ratio of the depth of the pressure relief groove to the thickness of the cover plate is within the range of the invention, during a thermal runaway, timely tearing of the pressure relief groove can be ensured, and the structural strength of the case under the conditions of normal operation of the cell can also be ensured.

In an optional embodiment, the peak intensity ratio gs of the first cycle delithiation DQ/DV curve of the battery is in the range of $1.0 \leq gs \leq 3.0$ between the characteristic peak 1 of 0.25V to 0.3V and the characteristic peak 2 of 0.4V to 0.45 V. Within the range, when the secondary battery maintains a relatively high specific capacity, the cycling performance and expansion reduction performance of the secondary battery are improved more favorably, thereby preventing the premature tearing of the pressure relief groove caused by excessive expansion of the negative electrode plate during charging and discharging of the steel-cased battery, and improving the protection effect of the case on the cell.

In an optional embodiment, the silicon-carbon composite material has an average degree of sphericity ranging from 0.5 to 1. Compared with non-spherical particles, the higher the degree of sphericity is, the closer the shape is to a sphere, and the smaller the effect of the volume expansion of the material has on the structure of an electrode plate; therefore, the overall structural stability of the electrode plate can be maintained during the expansion of the material. In addition, spherical particles can improve the mechanical strength and stability of the material and reduce stress concentration between the particles caused by expansion, thereby reducing the risks of mechanical wear and damage of the material during cycling. For example, the average degree of sphericity of the silicon-carbon composite material may be 0.5, 0.6, 0.7, 08, 0.9 or 1.

In an optional embodiment, the negative electrode plate has a porosity ranging from 5 % to 50 %. Porosity within the range can provide more space to accommodate the expansion of the silicon-carbon composite material, better absorb volume changes caused by charging and discharging of the silicon-carbon composite material, and help to maintain the structural stability and cycle life of a motor.

In an optional embodiment, the negative electrode plate has an OI value ranging from 3 to 35. An OI value within the range can strengthen the network structure of silicon, reduce structural collapse due to the volume expansion of the silicon-carbon composite material during charging and discharging, and allow for more efficient intercalation and de-intercalation of lithium ions into/from the silicon-carbon composite material during charging and discharging, thereby contributing to an increased energy density, prolonged cycle life and improved safety performance of the battery. For example, the OI value of the negative electrode plate may be 3, 5, 8, 10, 15, 20, 25, 30 or 35.

In an optional embodiment, the silicon-carbon composite material comprises a porous carbon substrate, silicon dispersed within porous carbon channels, and a carbon coating layer located on a surface of the porous carbon substrate;

optionally, the carbon coating layer is amorphous carbon; and

optionally, the mass content of silicon in the silicon-carbon composite material ranges from 30 % to 90 %, preferably 35 % to 70 %, and may be, for example, 30%, 40%, 42%, 45%, 48%, 50%, 60%, 70%, 80% or 90%.

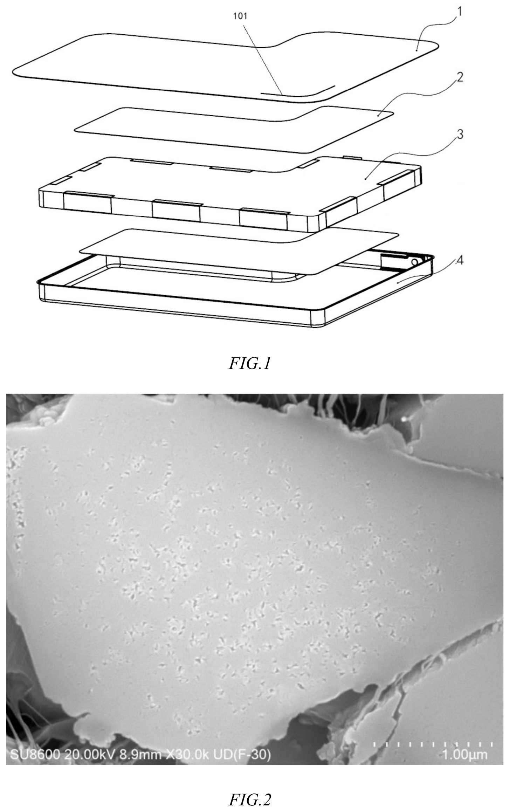

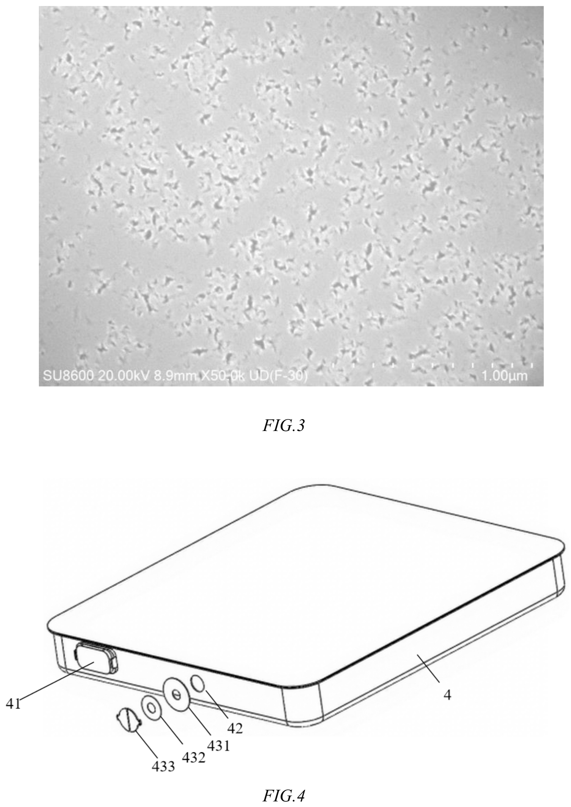

In an optional embodiment, the silicon-carbon composite material comprises open pores and/or closed pores, the closed pores referring to pores that are covered by the carbon coating layer in the porous carbon substrate, and open pores referring to pores that are not covered by the carbon coating layer in the porous carbon substrate (as shown in FIG. 2 and FIG. 3).

Optionally, the area of the open pores is smaller than that of the closed pores, which can effectively suppress the expansion of the silicon-carbon composite material, prevent the outer carbon coating layer from pulverization and fracturing, and reduce side reactions.

Example 1

This example provided a battery, as shown in FIG. 1, comprising a case and a cell 3, wherein the case was provided with a pressure relief groove 101; the cell 3 was arranged in the case; and
the case comprised a body 4 having an accommodating cavity that was used for accommodating the cell and had an opening, and a cover plate 1 covering the opening.

As shown in FIG. 1, the L-shape at the cover plate 1 was the pressure relief groove 101, which was etched on the cover plate 1 by means of a laser etching process. The wall of the cover plate 1 became thinner at a position where the pressure relief groove 101 was provided. In the case of a thermal runaway of the cell in the case, gas would press against the thinned area, the thinned area would preferentially tearing, and the gas was thus vented. The depth of the pressure relief groove 101 referred to the depth of the thinned portion of the cover plate 1. It should be noted that the pressure relief groove 101 might be thinned inwardly from the outer side of the cover plate 1, or be thinned outwardly from the inner side of the cover plate 1.

The cell 3 comprised a positive electrode plate, a separator and a negative electrode plate, which were stacked therein. The negative electrode plate comprised a negative electrode current collector and a negative electrode active material layer located on the negative electrode current collector, the negative electrode active material layer comprising a silicon-carbon composite material.

The surface of one side of the cell 3 facing the cover plate was provided with a bonding member 2, which was a hot melt adhesive in this example.

As shown in FIG. 4, one side plate of the case body 4 was provided with a positive terminal 41; the positive terminal 41 included a terminal portion connected to a positive tab of the cell; an inner insulating sheet and an outer insulating sheet were provided between the terminal and the case; and the terminal penetrated into the case from the outside and was then connected to the tab.

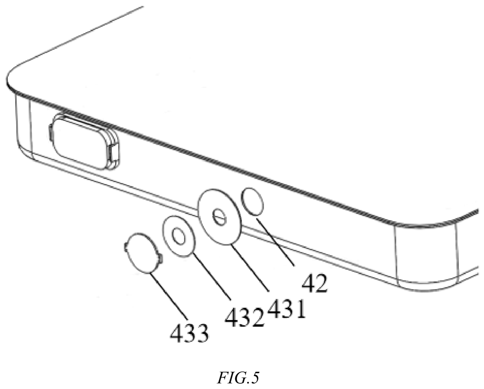

As shown in FIG. 4 and 5, one side plate of the case body 4 was further provided with a through hole 42 for electrolyte filling; and after electrolyte filling was completed, the through hole 42 for electrolyte filling was sealed with a sealing nail. The sealing nail was of a three-layer structure comprising a metal ring 431 welded with the case, a PP adhesive 432 and a metal sheet 433, wherein the metal ring 431 had a hole in communication with the through hole 42 for electrolyte filling; the PP adhesive 432 was U-shaped with a U-shaped hole; and the metal sheet 433 covered the sealed through hole for electrolyte filling. The function of the sealing nail was that when the steel case was short-circuited and failed, and then the PP adhesive of the sealing nail was heated and melted, the pressure could also be released from the through hole for electrolyte filling.

The pressure relief groove and the bonding member are arranged in an offset manner in the projection along the thickness direction of the case (that is, the projections did not overlap with each other), and the pressure relief groove and the negative electrode plate are arranged in an offset manner in the projection along the thickness direction of the case.

A method for preparing the battery of this example comprised:

(1) Preparation of negative electrode plate

A silicon-carbon composite material, graphite, conductive carbon black, polyacrylic acid, sodium carboxymethyl cellulose and styrene-butadiene rubber were mixed in a mass ratio of 43.1 : 53.8 : 0.5 : 1.3 : 0.4 : 0.9, and then added to deionized water and stirred until uniform to prepare a negative electrode slurry. The slurry was then uniformly coated onto a positive electrode current collector of copper foil, followed by drying and rolling, so as to prepare a negative electrode plate.

In a negative electrode active material layer of the negative electrode plate, the content in percentage by mass A of element silicon in the negative electrode active material layer was 19.38%. The porosity of the negative electrode plate was 27.8%. The OI value of the negative electrode plate was 32.67.

The silicon-carbon composite material comprised a porous carbon substrate, silicon dispersed within porous carbon channels, and a carbon coating layer located on a surface of the porous carbon substrate, wherein the carbon coating layer was amorphous carbon, and the mass content of element silicon in the silicon-carbon composite material was 45%. The silicon-carbon composite material comprised open pores and closed pores, the area of the open pores being smaller than the area of the closed pores.

The Dv50 of the silicon-carbon composite material in this example was 7.8 $\mu$m. The average degree of sphericity of the silicon-carbon composite material was 0.65.

(2) Preparation of positive electrode plate

Positive electrode plate: lithium cobalt oxide (LCO), polyvinylidene fluoride (PVDF) and conductive carbon black (Super P) were dissolved in N-methylpyrrolidone (NMP) in a mass ratio of 98 : 1 : 1 and stirred until uniform to prepare a positive electrode slurry. The slurry was then uniformly coated onto a positive electrode current collector of aluminum foil, followed by drying and rolling, so as to prepare a positive electrode plate.

(3) Assembly of battery

The negative electrode plate, the separator and the positive electrode plate were stacked in sequence to prepare a cell. The cell was then packaged with a case and a cover plate, followed by the procedures of electrolyte filling, secondary packaging, formation, sorting, etc., thereby obtaining the battery.

In the electrolyte of this example, the lithium salt used was lithium hexafluorophosphate (LiPF$_6$) at a concentration of 1 M; the organic solvent used was a mixture prepared from ethylene carbonate (EC), dimethyl carbonate (DMC) and ethyl methyl carbonate (EMC) in a mass ratio of 3 : 4 : 3; and the additives used were 3 wt% of fluoroethylene carbonate (FEC) and 1 wt% of vinylene carbonate.

In this example, the depth of the pressure relief groove was 50 $\mu$m; the thickness of the cover plate was 100 $\mu$m; and the ratio of the depth of the pressure relief groove to the thickness of the cover plate was 0.5. The ratio of the Dv50 of the silicon-carbon composite material to the depth of the pressure relief groove was 0.156.

In this example, A = 19.38%; and the ratio B, in percentage, of the projected area of the bonding member 2 along the thickness direction of the cell to the projected area of the electrode plate to which the bonding member 2 is bonded along the thickness direction of the cell was equal to 90%. A : B = 0.22.

Example 2

This example provided a battery, which was substantially the same as example 1, except that in this example, the depth of the pressure relief groove was 78 $\mu$m, the thickness of the cover plate was 150 $\mu$m, the Dv50 of the silicon-carbon composite material was 5 $\mu$m, the ratio of the Dv50 of the silicon-carbon composite material to the depth of the pressure relief groove was 0.06, and the ratio of the depth of the pressure relief groove to the thickness of the cover plate was 0.52.

Example 3

This example provided a battery, which was substantially the same as example 1, except that in this example, the depth of the pressure relief groove was 40 $\mu$m, the thickness of the cover plate was 75 $\mu$m, the Dv50 of the silicon-carbon composite material was 20 $\mu$m, the ratio of the Dv50 of the silicon-carbon composite material to the depth of the pressure relief groove was 0.5, and the ratio of the depth of the pressure relief groove to the thickness of the cover plate was 0.53.

Example 4

This example provided a battery, which was substantially the same as example 1, except that in this example, the depth of the pressure relief groove was 78 $\mu$m, the ratio of the Dv50 of the silicon-carbon composite material to the depth of the pressure relief groove was 0.10, and the ratio of the depth of the pressure relief groove to the thickness of the cover plate was 0.78.

Example 5

This example provided a battery, which was substantially the same as example 1, except that in this example, the depth of the pressure relief groove was 70 $\mu$m, the ratio of the Dv50 of the silicon-carbon composite material to the depth of the pressure relief groove was 0.111, and the ratio of the depth of the pressure relief groove to the thickness of the cover plate was 0.7.

Example 6

This example provided a battery, which was substantially the same as example 1, except that the Dv50 of the silicon-carbon composite material was 6.3 $\mu$m, and the ratio of the Dv50 of the silicon-carbon composite material to the depth of the pressure relief groove was 0.13.

Example 7

This example provided a battery, which was substantially the same as example 1, except that the Dv50 of the silicon-carbon composite material was 11.7 $\mu$m, and the ratio of the Dv50 of the silicon-carbon composite material to the depth of the pressure relief groove was 0.234.

Example 8

This example provided a battery, which was substantially the same as example 1, except that the depth of the pressure relief groove was 45 $\mu$m, the Dv50 of the silicon-carbon composite material was 5.1 $\mu$m, the ratio of the Dv50 of the silicon-carbon composite material to the depth of the pressure relief groove was 0.113, and the ratio of the depth of the pressure relief groove to the thickness of the cover plate was 0.45.

Example 9

This example provided a battery, which was substantially the same as example 1, except that B = 20%, and A : B = 0.97.

Example 10

This example provided a battery, which was substantially the same as example 1, except that B = 80%, and A : B = 0.24.

Example 11

This example provided a battery, which was substantially the same as example 1, except that a silicon-carbon composite material, graphite, conductive carbon black, polyacrylic acid, sodium carboxymethyl cellulose and styrene-butadiene rubber were mixed in a mass ratio of 66.7 : 30.2 : 0.5 : 1.3 : 0.4 : 0.9, and via measurement, A = 30%, and A: B = 0.33.

Example 12

This example provided a battery, which was substantially the same as example 1, except that a silicon-carbon composite material, graphite, conductive carbon black, polyacrylic acid, sodium carboxymethyl cellulose and styrene-butadiene rubber were mixed in a mass ratio of 3.3 : 93.6 : 0.5 : 1.3 : 0.4 : 0.9, and via measurement, A = 1.5%, and A: B = 0.017.

Example 13

This example provided a battery, which was substantially the same as example 1, except that a silicon-carbon composite material, graphite, conductive carbon black, polyacrylic acid, sodium carboxymethyl cellulose and styrene-butadiene rubber were mixed in a mass ratio of 88.9 : 8.0 : 0.5 : 1.3 : 0.4 : 0.9, and via measurement, A = 40%. Moreover, in this example, B = 25%, and A : B = 1.6.

Example 14

This example provided a battery, which was substantially the same as example 1, except that the thickness of the cover plate was 90 $\mu$m, and the ratio of the depth of the pressure relief groove to the thickness of the cover plate was 0.56.

Example 15

This example provided a battery, which was substantially the same as example 1, except that the thickness of the cover plate was 110 μm, and the ratio of the depth of the pressure relief groove to the thickness of the cover plate was 0.45.

Example 16

This example provided a battery, which was substantially the same as example 1, except that the thickness of the cover plate was 95 μm, and the ratio of the depth of the pressure relief groove to the thickness of the cover plate was 0.53.

Example 17

This example provided a battery, which was substantially the same as example 1, except that the thickness of the cover plate was 105 μm, and the ratio of the depth of the pressure relief groove to the thickness of the cover plate was 0.48.

Example 18

This example provided a battery, which was substantially the same as example 1, except that the average degree of sphericity of the silicon-carbon composite material was 0.5.

Example 19

This example provided a battery, which was substantially the same as example 1, except that the average degree of sphericity of the silicon-carbon composite material was 0.91.

Example 20

This example provided a battery, which was substantially the same as example 1, except that the porosity of the negative electrode plate was 5%.

Example 21

This example provided a battery, which was substantially the same as example 1, except that the porosity of the negative electrode plate was 50%.

Example 22

This example provided a battery, which was substantially the same as example 1, except that the OI value of the negative electrode plate was 3.

Example 23

This example provided a battery, which was substantially the same as example 1, except that the OI value of the negative electrode plate was 35.

Example 24

This example provided a battery, which was substantially the same as example 1, except that a silicon-carbon composite material, graphite, conductive carbon black, polyacrylic acid, sodium carboxymethyl cellulose and styrene-butadiene rubber were mixed in a mass ratio of 48.5 : 48.5 : 0.5 : 1.3 : 0.4 : 0.9, and the mass content of element silicon in the silicon-carbon composite material was 40%.

Example 25

This example provided a battery, which was substantially the same as example 1, except that a silicon-carbon composite material, graphite, conductive carbon black, polyacrylic acid, sodium carboxymethyl cellulose and styrene-butadiene rubber were mixed in a mass ratio of 27.7 : 69.2 : 0.5 : 1.3 : 0.4 : 0.9, and the mass content of element silicon in the silicon-carbon composite material was 70%.

Example 26

The battery structure of this example was substantially the same as that of example 1, except that:

A = 30%; the porosity of the negative electrode plate was 39%; the OI value of the negative electrode plate was 28; the mass content of element silicon in the silicon-carbon composite material was 50%;
the Dv50 of the silicon-carbon composite material in this example was 11.46 $\mu$m; the average degree of sphericity of the silicon-carbon composite material was 0.73; and
the ratio of the Dv50 of the silicon-carbon composite material to the depth of the pressure relief groove was 0.229.

Example 27

The battery structure of this example was substantially the same as that of example 1, except that:

A = 1.5%; the porosity of the negative electrode plate was 24.2%; the OI value of the negative electrode plate was 15.9; in this example, the silicon-carbon composite material comprised a porous carbon substrate, silicon dispersed within porous carbon channels, and a carbon coating layer located on a surface of the porous carbon substrate, wherein the carbon coating layer was amorphous carbon, and the mass content of silicon in the silicon-carbon composite material was 40%;
the Dv50 of the silicon-carbon composite material in this example was 9.2 $\mu$m; the average degree of sphericity of the silicon-carbon composite material was 0.86; and
the ratio of the Dv50 of the silicon-carbon composite material to the depth of the pressure relief groove was 0.184.

Comparative example 1

This example was substantially the same as example 1, except that in this example, the depth of the pressure relief groove was 90 $\mu$m, the Dv50 of the silicon-carbon composite material was 3 $\mu$m, the ratio of the Dv50 to the depth of the pressure relief groove was 0.033, and the ratio of the depth of the pressure relief groove to the thickness of the cover plate was 0.9.

Comparative example 2

This example was substantially the same as example 1, except that in this example, the depth of the pressure relief groove was 30 $\mu$m, the Dv50 of the silicon-carbon composite material was 24 $\mu$m, the ratio of the Dv50 of the silicon-carbon composite material to the depth of the pressure relief groove was 0.8, the ratio of the depth of the pressure relief groove to the thickness of the cover plate was 0.3, the silicon-carbon composite material, graphite, conductive carbon black, polyacrylic acid, sodium carboxymethyl cellulose and styrene-butadiene rubber were in a mass ratio of 73.68 : 23.2 : 0.5 : 1.3 : 0.4 : 0.9, the content in percentage by mass of element silicon in the silicon-carbon composite material was 95%, the content in percentage by mass A of element silicon in the negative electrode active material layer was 70%, the ratio B, in percentage, of the projected area of the bonding member 2 along the thickness direction of the cell to the projected area of the electrode plate to which the bonding member 2 was bonded along the thickness direction of the cell was equal to 30%, and A : B = 2.33.

Test examples

1. Test method for degree of sphericity: after being discharged to 0% SOC, a lithium-ion secondary battery was disassembled, and a negative electrode plate was taken out, then soaked in a dimethyl carbonate (DMC) solvent for 12 h and then rinsed with DMC to remove a lithium salt attached thereto; a negative electrode active material layer was rinsed off the electrode plate with deionized water, and after an ultrasonic treatment and centrifugation to remove the filtrate, the remaining material was dried in the air; and the resulting powder was observed with a scanning electron microscope in a backscattering mode, in which mode the silicon-carbon composite material had a bright contrast, which helped to distinguish from graphite and conductive carbon black. The image of each particle having a relatively bright contrast in an SEM micrograph at a given magnification (e.g., 2500x) was analysed by means of image processing software (e.g., Image Pro Plus), so as to obtain the perimeter and area of each particle; the perimeter-equivalent radius r1 and the area-equivalent radius r2 of each particle were separately calculated, and then the degree of sphericity S of each particle satisfied S = r2/r1; and the number-weighted average of the degrees of sphericity of all the particles was calculated so as to obtain the average degree of sphericity of the silicon-carbon composite material in the negative electrode plate.

2. Test method for volume-based particle size of silicon-carbon composite material: the particle size Dv50 could be measured by means of a laser particle size measurment method. For example, a Malvern Mastersizer was used for measuring the particle size by means of the following measuring steps: dispersing a silicon-carbon composite material in deionized water containing a dispersant (e.g., nonylphenol polyoxyethylene ether, with a content of 0.02-0.03 wt%) to form a mixture, subjecting same to an ultrasonic treatment for 2 min, and then placing same into the Malvern Mastersizer for measurement.

3. Test method for porosity: a gas displacement method was used for measuring the porisity and comprised the following specific steps: after being discharged to 0% SOC, a lithium-ion secondary battery was disassembled, and a negative electrode plate was taken out, then soaked in a dimethyl carbonate (DMC) solvent for 12 h and then rinsed with DMC to remove a lithium salt attached thereto, after drying in the air, the negative electrode plate was cut into discs having a diameter of 12 mm with a slicer, the thickness of 20 discs was measured with a micrometer, the volume of each disc was separately calculated and summed to obtain the sum of the volumes of the 20 discs V1; and then the true volume V2 of the 20 discs was measured by a true density analyzer (e.g., a JW-M100A fully automated true density analyzer from JWGB Instrument), with helium as a measuring gas and an ambient temperature during measuring being $25 \pm 2°C$. Then the porosity of the negative electrode plate was (V1-V2)/V1*100%.

4. Test method for OI value: after being discharged to 0% SOC, a lithium-ion secondary battery was disassembled, a negative electrode plate was taken out, then soaked in a dimethyl carbonate (DMC) solvent for 12 h and then rinsed with DMC to remove a lithium salt attached thereto, and the negative electrode plate was dried in the air and then tested with an X-ray powder diffraction instrument (e.g., an XRD-6100 X-ray diffractometer from Shimadzu). In the obtained diffraction pattern, the diffraction peak appearing at 2θ of 54-55° was the (004) peak of graphite, with the intensity thereof being denoted as I004, the diffraction peak appearing at 2θ of 77-78° was the (110) peak of graphite, with the intensity thereof being denoted as 1110, and then the OI value of the negative electrode plate was I004/I110.

5. Test of cycle capacity retention rate

At 25°C, a battery was charged at a constant current of 1C to 4.45 V, then charged at a constant voltage to a cut-off current of 0.05C, then left to stand for 5 minutes, and finally discharged at a constant current of 1C to 3.0 V. The process was the first cycle and was repeated 300 times. The capacity retention rate was calculated on the basis of the capacity retention rate (%) of the battery after 300 cycles = the discharge capacity after 300 cycles/the discharge capacity after the first cycle $\times$ 100%.

6. Test of thickness expansion rate

The initial PPG thickness of the battery at 50% SOC before cycling was recorded as P1; after 300 cycles, the PPG thickness of the test battery at 100% SOC was measure and recorded as P2; and then the thickness expansion rate % = (P2-P1)/P1 $\times$ 100%.

7. Test of safety performance: At 25°C, a battery was charged at 3C to 4.45 V, with the cut-off current being 0.2C, and was then discharged at 0.5C to 3 V; and after the charging and discharging steps were repeated 20 times, the battery was disassembled, and the lithium plating of the battery was observed.

8. Drop test: In an environment at $25°C \pm 5°C$, a battery was discharged at 0.2C to the lower voltage limit, then left to stand for 10 min, then charged at 1C to the upper voltage limit, with the cut-off current being 0.02C, and then left to stand for 10 min. In an environment at 25°C, the battery in a fully-charged state freely dropped from a height of 1 meter onto a concrete plate or metal floor, and the battery was determined to pass the test when there was no fire or explosion. The test was performed three times.

9. Oven test: A fully-charged battery was placed in an oven and heated at a heating rate of $5 \pm 2°C/min$, and when the internal temperature of the oven reached 130°C, the temperature was kept constant for 60 minutes. The battery was determined to pass the test when there was no fire or explosion. The test was performed three times.

10. Depth of pressure relief groove: the thickness of the groove was measured by scanning electron microscope in a cross section.

11. Thickness of cover plate: a conventional thickness measurement means was used, and the thickness of the cover plate could be directly measured with a micrometer when it was disassembled, and the thickness of the cover plate could be measured by means of CT scanning when it was not disassembled.

12. Content in percentage by mass of element silicon in negative electrode active material layer: the test was carried out by thermogravimetric analysis, and specifically as follows: after being discharged to 0% SOC, a lithium-ion secondary battery was disassembled, and a negative electrode plate was taken out, then soaked in a dimethyl carbonate (DMC) solvent for 12 h and then rinsed with DMC to remove a lithium salt adhered thereto; after drying in the air, the electrode plate was subjected to a high-temperature treatment at 400°C in an inert atmosphere for 2 h (for example, in a tube furnace in a nitrogen or argon atmosphere); and the negative electrode active material layer could then be peeled off a current collector, and the negative electrode active material was collected. In the measurement of the content of silicon, a thermogravimetric analyzer (e.g., a TGA 550 thermogravimetric analyzer) was used, and the amount of a sample for measurement was 5-15 mg; and the temperature was increased from room temperature to 900°C at a heating rate of 10°C/min in an air or oxygen atmosphere, and then maintained at 900°C for 40 min, thereby allowing non-silicon components in the negative electrode active material layer to be volatilized while the silicon was fully oxidized to silicon dioxide. The content in percentage by weight at the end of the entire measurement process represented the ash content of the negative electrode active material layer; and by dividing the value of the ash content by the molar mass of silicon dioxide (60) and then multiplying by the molar mass of silicon (28), the content in percentage of element silicon in the negative electrode active material layer was obtained.

13. Mass content of element silicon in silicon-carbon composite material: the test was carried out by thermogravimetric analysis, for example, by using a DTG-60 thermogravimetric analyzer from Shimadzu, under the following measurement conditions: the amount of the sample was 5 mg; air was used as an atmosphere; and the temperature was increased from room temperature to 900°C at a heating rate of 10°C/min and kept constant for 40 min. The relationship between the silicon content x of the composite material and the final weight percentage y of residue of the entire measurement satisfied $x = 7y/15$.

The test results are shown in Table 1.

Table 1

| | Cycle capacity retention rate (300 T) | Thickness expansion rate (300 T) | Thickness expansion rate of full-charged battery | Number of drop tests that battery passes/total number of drop tests | Number of oven tests that battery passes/total number of oven tests |
|---|---|---|---|---|---|
| Example 1 | 96.2% | 7.3% | 5.2% | 3/3 | 3/3 |
| Example 2 | 94.7% | 7.9% | 6% | 3/3 | 3/3 |
| Example 3 | 93.0% | 7.0% | 5.1% | 3/3 | 3/3 |
| Example 4 | 97.5% | 7% | 4.9% | 3/3 | 3/3 |
| Example 5 | 98.2% | 6.4% | 5.8% | 3/3 | 3/3 |
| Example 6 | 92.9% | 8.8% | 6.1% | 3/3 | 3/3 |
| Example 7 | 95.7% | 7.8% | 5.5% | 3/3 | 3/3 |
| Example 8 | 91.5% | 9% | 7.4% | 3/3 | 3/3 |
| Example 9 | 95.2% | 7.5% | 5.6% | 3/3 | 3/3 |
| Example 10 | 95.7% | 6.3% | 4.9% | 3/3 | 3/3 |
| Example 11 | 93.8% | 8.9% | 6.5% | 3/3 | 3/3 |
| Example 12 | 98.2% | 4.8% | 3.1% | 3/3 | 2/3 |
| Example 13 | 95.5% | 9% | 7% | 3/3 | 2/3 |
| Example 14 | 95.7% | 6.9% | 5.7% | 3/3 | 3/3 |
| Example 15 | 96.4% | 6.5% | 5.1% | 3/3 | 3/3 |
| Example 16 | 97.3% | 6.4% | 5% | 3/3 | 3/3 |
| Example 17 | 96.9% | 5.8% | 4.4% | 3/3 | 3/3 |
| Example 18 | 92.1% | 7.7% | 5.3% | 3/3 | 3/3 |
| Example 19 | 89.6% | 9.1% | 6.8% | 3/3 | 3/3 |
| Example 20 | 85.2% | 8.3% | 6.6% | 3/3 | 3/3 |
| Example 21 | 90.5% | 7.8% | 5.9% | 3/3 | 3/3 |
| Example 22 | 93.5% | 7.5% | 5.7% | 3/3 | 3/3 |
| Example 23 | 96.8% | 6.9% | 5.1% | 3/3 | 3/3 |
| Example 24 | 90.9% | 7.4% | 5.5% | 3/3 | 3/3 |
| Example 25 | 88.4% | 8.1% | 6.0% | 3/3 | 3/3 |

(continued)

| | Cycle capacity retention rate (300 T) | Thickness expansion rate (300 T) | Thickness expansion rate of full-charged battery | Number of drop tests that battery passes/total number of drop tests | Number of oven tests that battery passes/total number of oven tests |
|---|---|---|---|---|---|
| Example 26 | 86.2% | 8.7% | 6.7% | 3/3 | 3/3 |
| Example 27 | 90.1% | 6.5% | 5.2% | 3/3 | 3/3 |
| Comparative example 1 | 85.6% | 8.9% | 8% | 0/3 | 3/3 |
| Comparative example 2 | 81.1% | 11% | 8.5% | 0/3 | 0/3 |

A drop test is performed on a battery in a fully-charged state. As can be seen from the thickness expansion rates of full-charged batteries in Table 1, a battery in a fully-charged state has expanded to a certain extent, and a drop test performed thereon can reflect whether a pressure relief groove will have a premature tearing or not after the expansion of a negative electrode plate of the battery. If a battery passes an oven test, it is indicated that the pressure relief groove of the battery was broken in time during an oven test, and thus heat and gas are dissipated, thereby preventing the battery from fire and explosion.

As can be seen from the comparison between examples 1-27 and comparative examples 1 and 2, the battery of the invention has both a high drop test pass rate and a high oven test pass rate, the pressure relief groove of the battery of the invention can achieve its normal function of pressure relief, and the premature tearing of the pressure relief groove caused by excessive expansion of a negative electrode plate during charging and discharging of the steel-cased battery can also be prevented. The pressure relief groove in comparative example 1 is too deep, and the expansion of the battery in a fully-charged state or in a cycling stage breaks the pressure relief groove, leading to deterioration in cycling and a drop test pass rate of 0. The Dv50 of the silicon-carbon composite material in comparative example 2 is 24 $\mu$m, resulting in an excessively large size and large polarization of silicon-carbon composite material particles, which may lead to lithium plating of the negative electrode and deteriorated cycling performance, thereby causing hard expansion and tearing of the pressure relief groove in a drop test. Moreover, the pressure relief groove is too shallow and cannot be broken in time during an oven test, and thus heat and gas cannot be dissipated, thereby resulting fire and explosion of the battery and an oven test pass rate of 0.

Obviously, the above examples are merely examples given for clarity of illustration and are not intended to limit the embodiments. For those of ordinary skill in the art, other different forms of changes or variations could have also been made on the basis of the above-mentioned illustrations. There is no need to exhaustively list all embodiments herein, although it cannot be achieved. The obvious changes or variations thus derived are still within the scope of protection of the invention.

Claims

1. A battery, **characterized in that** comprising a case and a cell (3), wherein the case is provided with a pressure relief groove (101); the cell (3) is arranged within the case and comprises a positive electrode plate, a separator and a negative electrode plate, which are stacked; the negative electrode plate comprises a negative electrode current collector and a negative electrode active material layer located on the negative electrode current collector, the negative electrode active material layer comprising a silicon-carbon composite material; and
a ratio of a particle size Dv50 of the silicon-carbon composite material to a depth of the pressure relief groove (101) ranges from 0.06 to 0.6.

2. The battery according to claim 1, **characterized in that** at least one of the following conditions is satisfied:

   (1) the particle size Dv50 of the silicon-carbon composite material ranges from 5 $\mu$m to 20 $\mu$m, preferably 6 $\mu$m to 12 $\mu$m; and
   (2) the depth of the pressure relief groove (101) ranges from 35 $\mu$m to 85 $\mu$m, preferably 40 $\mu$m to 80 $\mu$m.

3. The battery according to claim 1, **characterized in that** the case comprises a body (4) having an accommodating cavity that is used for accommodating the cell (3) and has an opening, and a cover plate (1) covering the opening; the surface of one side of the cell (3) facing the cover plate (1) is provided with a bonding member (2);

A : B = 0.015-2,

> where A is a content in percentage by mass of element silicon in the negative electrode active material layer, and B is the ratio, in percentage, of a projected area of the bonding member (2) along the thickness direction of the cell (3) to a projected area of a electrode plate to which the bonding member (2) is bonded along the thickness direction of the cell (3);
> optionally, A ranges from 1.5 % to 40 %; and
> optionally, B ranges from 20 % to 95 %.

4. The battery according to claim 3, **characterized in that** the pressure relief groove (101) is provided on the cover plate (1); and
optionally, the pressure relief groove (101) satisfies at least one of the following conditions:

> (1) the pressure relief groove (101) and the bonding member (2) are arranged in an offset manner in the projection along the thickness direction of the case; and
> (2) the pressure relief groove (101) and the negative electrode plate are arranged in an offset manner in the projection along the thickness direction of the case.

5. The battery according to claim 4, **characterized in that** a ratio of a depth of the pressure relief groove (101) to the thickness of the cover plate (1) ranges from 0.35 to 0.9, preferably 0.45 to 0.8;

> optionally, the depth of the pressure relief groove (101) ranges from 35 $\mu$m to 85 $\mu$m, preferably 40 $\mu$m to 80 $\mu$m; and
> optionally, the thickness of the cover plate (1) ranges from 70 $\mu$m to 200 $\mu$m, preferably 70 $\mu$m to 160 $\mu$m,

6. The battery according to claim 1, **characterized in that** one side plate of the body (4) is provided with a positive terminal (41), the positive terminal (41) comprises a terminal portion, an inner insulating sheet and an outer insulating sheet, wherein the terminal portion connects to a positive tab of the cell and the inner insulating sheet an the outer insulating sheet are provided between the terminal and the case, and the positive terminal (41) penetrats into the case from the outside and is connected to the positive tab.

7. The battery according to claim 1, **characterized in that** one side plate of the body (4) is further provided with a through hole (42), the through hole (42) is sealed with a sealing nail.

8. The battery according to claim 7, **characterized in that** the sealing nail comprises a metal ring (431), a PP adhesive (432) and a metal sheet (433), wherein the metal ring (431) is welded with the case and the metal ring (431) has a hole in communication with the through hole (42), and the metal sheet (433) covered the sealed through hole.

9. The battery according to claim 7, **characterized in that** the sealing nail was of a three-layer structure; and/or the PP adhesive (432) is U-shaped with a U-shaped hole.

10. The battery according to any one of claims 1-3, **characterized in that** the silicon-carbon composite material has an average degree of sphericity ranging from 0.5 to 1.

11. The battery according to any one of claims 1-3, **characterized in that** the negative electrode plate has a porosity ranging from 5 % to 50 %.

12. The battery according to any one of claims 1-3, **characterized in that** the negative electrode plate has an OI value ranging from 3 to 35.

13. The battery according to any one of claims 1-3, **characterized in that** the silicon-carbon composite material comprises a porous carbon substrate, silicon dispersed within porous carbon channels, and a carbon coating layer located on a surface of the porous carbon substrate;

> optionally, the carbon coating layer is amorphous carbon; and
> optionally, a mass content of element silicon in the silicon-carbon composite material ranges from 30 % to 90 %, preferably 35 % to 70 %.

14. The battery according to claim 13, **characterized in that** the silicon-carbon composite material comprises open pores and/or closed pores, the closed pores referring to pores that are covered by the carbon coating layer in the porous carbon substrate, and open pores referring to pores that are not covered by the carbon coating layer in the porous carbon substrate; and

optionally, a area of the open pores is smaller than that of the closed pores.

*FIG.1*

*FIG.2*

*FIG.3*

*FIG.4*

*FIG.5*

Europäisches
Patentamt

European
Patent Office

Office européen
des brevets

# EUROPEAN SEARCH REPORT

**Application Number**

EP 25 21 3755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/245561 A1 (NINGDE AMPEREX TECHNOLOGY LTD [CN]) 28 December 2023 (2023-12-28) * the whole document * ----- | 1-14 | INV. H01M4/38 ADD. H01M4/36 |
| A | US 2023/223644 A1 (GU MINGGUANG [CN] ET AL) 13 July 2023 (2023-07-13) * the whole document * ----- | 1-14 | |
| A | JP 6 569398 B2 (HITACHI CHEMICAL CO LTD) 4 September 2019 (2019-09-04) * the whole document * ----- | 1-14 | |

**TECHNICAL FIELDS SEARCHED (IPC)**

H01M

The present search report has been drawn up for all claims

| Place of search | Date of completion of the search | Examiner |
|---|---|---|
| Munich | 25 March 2026 | Radeck, Stephanie |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 21 3755

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2026

| Patent document cited in search report | | | Publication date | Patent family member(s) | | | Publication date |
|---|---|---|---|---|---|---|---|
| WO 2023245561 | A1 | | 28-12-2023 | CN | 116349075 | A | 27-06-2023 |
| | | | | EP | 4531185 | A1 | 02-04-2025 |
| | | | | US | 2025125455 | A1 | 17-04-2025 |
| | | | | WO | 2023245561 | A1 | 28-12-2023 |
| US 2023223644 | A1 | | 13-07-2023 | CA | 3183528 | A1 | 28-02-2023 |
| | | | | CN | 116075964 | A | 05-05-2023 |
| | | | | CN | 116438702 | A | 14-07-2023 |
| | | | | CN | 116711134 | A | 05-09-2023 |
| | | | | CN | 116783763 | A | 19-09-2023 |
| | | | | CN | 218414924 | U | 31-01-2023 |
| | | | | CN | 218414925 | U | 31-01-2023 |
| | | | | CN | 218769952 | U | 28-03-2023 |
| | | | | EP | 4167368 | A1 | 19-04-2023 |
| | | | | EP | 4239777 | A1 | 06-09-2023 |
| | | | | EP | 4287380 | A1 | 06-12-2023 |
| | | | | EP | 4340112 | A1 | 20-03-2024 |
| | | | | JP | 7514380 | B2 | 10-07-2024 |
| | | | | JP | 7592163 | B2 | 29-11-2024 |
| | | | | JP | 7607126 | B2 | 26-12-2024 |
| | | | | JP | 7731986 | B2 | 01-09-2025 |
| | | | | JP | 2023542593 | A | 11-10-2023 |
| | | | | JP | 2023549795 | A | 29-11-2023 |
| | | | | JP | 2023549906 | A | 29-11-2023 |
| | | | | JP | 2023549907 | A | 29-11-2023 |
| | | | | KR | 20230035342 | A | 13-03-2023 |
| | | | | KR | 20230084541 | A | 13-06-2023 |
| | | | | KR | 20230088460 | A | 19-06-2023 |
| | | | | KR | 20230088468 | A | 19-06-2023 |
| | | | | KR | 20250161054 | A | 14-11-2025 |
| | | | | KR | 20250164858 | A | 25-11-2025 |
| | | | | US | 2023223644 | A1 | 13-07-2023 |
| | | | | US | 2023327275 | A1 | 12-10-2023 |
| | | | | US | 2023420793 | A1 | 28-12-2023 |
| | | | | US | 2024154240 | A1 | 09-05-2024 |
| | | | | US | 20260031471 | A1 | 29-01-2026 |
| | | | | WO | 2023028864 | A1 | 09-03-2023 |
| | | | | WO | 2023030399 | A1 | 09-03-2023 |
| | | | | WO | 2023030404 | A1 | 09-03-2023 |
| | | | | WO | 2023030405 | A1 | 09-03-2023 |
| JP 6569398 | B2 | | 04-09-2019 | JP | 6569398 | B2 | 04-09-2019 |
| | | | | JP | 2017050142 | A | 09-03-2017 |

For more details about this annex : see Official Journal of the European Patent Office, No. 12/82

EPO FORM P0459